# EUROPEAN PATENT SPECIFICATION

(11) **EP 0 897 341 B1**
(45) Date of publication and mention of the grant of the patent: **23.02.2000**
(21) Application number: 97918278.9
(22) Date of filing: 01.05.1997
(51) Int. Cl.: B60K 11/04, B60H 1/32, F28F 9/00

(54) **RADIATOR AND CONDENSER ASSEMBLY**
ANORDNUNG VON RADIATOR UND KONDENSATOR
ENSEMBLE RADIATEUR ET CONDENSATEUR

(30) Priority: 04.05.1996 GB 9609440; 04.05.1996 GB 9609437
(43) Date of publication of application: 24.02.1999
(73) Proprietor: FORD MOTOR COMPANY LIMITED, Brentwood, Essex CM13 3BW (GB); FORD-WERKE AKTIENGESELLSCHAFT, 50735 Köln (DE); FORD FRANCE S. A., 92506 Rueil-Malmaison Cédex (FR); Ford Motor Company, Dearborn, MI 48126 (US)
(72) Inventor: CAPALDI, Benedict, Chelmsford, Essex CM2 0BG (GB); CLIFTON, Andrew, London N10 1EI (GB); WHITE, Ian, David, Brentwood, Essex CM14 5JZ (GB)
(74) Representative: Messulam, Alec Moses
(86) International application number: GB9701191
(87) International publication number: WO9742049

(56) References cited:
- EP-A- 0 566 473

## Description

### Field of the invention

The invention relates to an improved radiator and condenser assembly for a motor vehicle.

Most motor vehicles now have two major heat exchangers, a radiator used to dissipate the heat from the engine and a condenser forming part of the climate control system for controlling the temperature of air fed into the passenger compartment of the vehicle for the comfort of passengers.

Each heat exchanger essentially comprises a body of a plurality of small tubes spaced apart and parallel to one another through which a fluid may pass allowing heat exchange through the surface of the tubes. Typically the parallel tubes extend between two further tubes or end tanks arranged substantially perpendicular to the plurality of tubes. The arrangement is essentially in the form of a cuboid slab with four elongate substantially rectangular edges and two substantially planar faces. The heat exchangers are not of constant cross section, for example the end tank may be cylindrical or part cylindrical.

The radiator end tanks are typically of moulded plastics material, and include an inlet end tank and a return end tank. The condenser typically has end caps at each end of each end tube, the end caps extending out of the condenser in a direction parallel to the longitudinal axis of the tank. Thus the two transverse edges of the condenser have two end caps.

It is accepted that a practical and effective heat exchange takes place when the condenser and radiator are mounted parallel one to another so that they can sit within the same cooling air flow and one fan can provide the air flow through both heat exchangers. It is well known in the prior art to mount the condenser and radiator together within the engine compartment. Similarly the fan shroud of the fan which provides this air flow is often mounted upon the radiator. Typically the condenser has brackets welded or brazed to its surface and the radiator has flanges which allow the condenser and radiator to be coupled together via the bracket and flange being fastened together.

In one radiator and condenser assembly of the prior art described in US patent 5 219 016, the condenser and radiator are arranged such that the radiator and condenser may be slid with respect to each other to mount the condenser upon the radiator. The condenser has mounted upon it a pair of J shaped brackets and the radiator has two L shape brackets attached to it. By sliding the radiator with respect to the condenser in two directions the L shape bracket of the radiator is brought into the J shaped bracket of the condenser. In order to hold the condenser and radiator vertically with respect to one another a clamping member with resilient jaws is placed over the upper edges of the condenser and radiator.

### Summary of the Invention

According to the invention there is provided a radiator and condenser assembly, in which the condenser includes at least one end cap facing longitudinally outwards of the edge of the condenser for closing an aperture into the condenser, the end cap being a shaped end cap with an inner body portion of a cross section shaped and sized to cover the condenser aperture and which in use lies closest to the condenser, and an outer head portion of smaller cross section than the body portion such that a shoulder is formed between the head and body portion of the end cap facing longitudinally outwards of the condenser, and the radiator includes at least one radiator end tank which comprises a condenser mounting bracket, the mounting bracket including an end cap receiving housing spaced from the surface of the radiator with walls defining an open faced cavity for receiving the shaped end cap, a first open face of the cavity facing longitudinally inwards of the radiator and a second open face of the cavity facing transversely inwards of the radiator, the cavity defining a body cavity whose cross sectional dimension at least in a direction perpendicular to the face of the radiator is slightly greater than the cross section of the body portion of the shaped end cap and a head cavity of smaller cross section than the body cavity such that a cavity shoulder is defined between the head and body cavity facing towards the first open face of the cavity, the housing walls defining a flange facing inwards of the periphery of the first open face of the cavity, the distance between the cavity shoulder and the flange being slightly greater than the depth of the body portion of the shaped end cap.

In this specification the term 'longitudinal' will be taken to mean a direction generally perpendicular to the edge of the condenser on which the end cap is situated and 'transverse' is to mean any direction substantially parallel to that edge.

Such an assembly allows the radiator and condenser to be mounted upon each other without the need for separate brackets or flanges.

Preferably the condenser mounting bracket is integrally moulded as part of the radiator end tank which means that no extra brackets or flanges need to be attached to the radiator. More importantly the condenser does not need to have anything mounted upon it, or added to it in any way in order for the mounting to be possible. The assembly utilises a component which needs to be present in the condenser. This means that the manufacture of the condenser can be made simpler and cheaper, because the condenser can be one shot brazed. Also the assembly of the radiator and condenser is quick and simple, thus reducing the cost of the assembly. Because of this, the condenser and radiator can be supplied as a combined module to an assembly plant.

The end cap of the condenser when located within the end cap receiving housing of the radiator limits the relative movement of the radiator and condenser in a longitudinal direction to the difference between the depth of the body portion of the end cap and the distance between the cavity shoulder and the flange. Relative movement of the condenser and radiator in a direction towards and away from each other is limited to the difference between the cross section of the body cavity and the cross section of the body portion of the end cap.

The term slightly greater than is taken to mean large enough to allow the end cap to be relatively easily slotted into the housing but minimising the difference between the shape of the body portion of the end cap and the body cavity to ensure that there is minimal relative movement permitted. Typically the difference will be in the region of 3 to 6 mm.

The assembly requires some means to prevent the condenser sliding transversely taking the end cap out of the housing. Preferably the radiator is arranged such that both its end tanks include condenser mounting brackets, and the condenser includes two shaped end caps so that the condenser is held firmly between the brackets to prevent relative tranverse movement of the radiator and condenser. Preferably the radiator includes releasable locking means which cooperate with the end cap receiving housing for locking the shaped end cap into position within the bracket. This may be achieved by passing a screw threaded member through two jaws or clamp members which urge the walls of the cavity to grip against the shaped end cap when the screw is tightened. Alternatively the walls of the cavity may be arranged to include a resilient detent extending into the cavity and engaged by the end cap when inserted into the cavity to give a snap fit.

Typically the cross section of the body portion of the end cap is largely determined by the cross section of the condenser aperture. Typically the condenser aperture will be circular and therefore conveniently the body portion of the end cap will be cylindrical. In this case since movement into and out of the cavity is required the body cavity has a cross section of a semi-circle. However it will be appreciated by the skilled addressee of the specification that a variety of different cross sections could be used.

In order to allow for simple manufacture and for ease of sliding into and out of the cavity preferably the head portion is of constant cross section.

Although it is possible for the shoulder formed between the head and body of both the shaped end cap and the cavity to be non planar preferably the shoulder is planar and that plane is parallel to the inner face of the shaped end cap.

Preferably therefore the shaped end cap is essentially T shaped in cross section in a longitudinal direction.

Radiator end tanks are made from a variety of materials but typically are of a plastics material. In this case it is preferred that the radiator end tank is moulded from glass filled nylon while condenser end caps are typically metal.

The peripheral flange of the cavity walls does not need to extend about the entire periphery of the cavity. It is sufficient if the flange serves to engage the inner edge of the body portion of the end cap and prevents the end cap from being removable out of the first open face of the cavity.

The movement of the vehicle and the movement of the fan and the air flow cause vibration of the engine components, in particular of the radiator and condenser.

In order to damp vibration between the condenser and radiator preferably the radiator end tank includes a vibration damping device comprising a resilient tongue extending outwards from the surface of the radiator and having a free end forming a biasing member spaced from the surface of the radiator and whose outer surface when unloaded lies at an acute angle to the surface of the radiator, the size and position of the tongue being arranged such that when a further component is mounted adjacent the radiator, the component contacts and urges the biasing member towards the surface of the radiator to spring load the tongue.

The resilient tongue typically is integrally moulded with the radiator end tank thus providing an integral vibration damping device which does not need to be separately mounted between the radiator and an adjacent component during assembly. This cuts down on assembly time and therefore cost. The preferred material of the radiator end tank is glass reinforced nylon which is resilient enough to provide vibration damping.

The position and length of the biasing member is arranged such that the adjacent component contacts and bears against its outer surface to spring load it.

The thickness of the biasing member is chosen to give the required resilience which depends on the weight of the adjacent component and the expected amplitude of vibration.

The vibration damping device may advantageously be used to damp vibration between a radiator and a condenser and/ or a radiator and a fan shroud.

### Brief Description of the Drawings

Four embodiments of radiator and condenser assemblies in accordance with the present invention will now be described, by way of example only, with reference to the accompanying drawings, in which : -
Figure 1 is an end elevation of the outer edge of the return tank of a radiator of a first radiator and condenser assembly;
Figure 2 is an enlarged view of part of figure 1;
Figure 3 is an end elevation of the outer edge of the radiator inlet tank of the first radiator and condenser assembly;
Figure 4 is an exploded perspective view of the first radiator and condenser assembly;
Figure 5 is a perspective view of a shaped end cap of the first radiator and condenser assembly;
Figure 6 is a perspective view of the condenser mounting bracket of the return radiator end tank illustrated in Figures 1 and 2;
Figure 7 is a perspective view of the condenser mounting bracket of Figure 6 showing the shaped end cap in position;
Figure 8 is a perspective view of the condenser mounting bracket of inlet radiator tank illustrated in Figure 3;
Figure 9 is a perspective view of the condenser mounting bracket of Figure 8 showing an end cap in position;
Figure 10 is an enlarged perspective view of a vibration damping device of the first radiator and condenser assembly;
Figure 11 is a section through the vibration damping device of figure 10 with the end cap in position;
Figure 12 is a side elevation of a second embodiment of condenser mounting bracket in accordance with the invention;
Figure 13 is a plan view of the condenser mounting bracket of Figure 12;
Figure 14 is a side view of a third embodiment of condenser mounting bracket;
Figure 15 is a plan view of the condenser mounting bracket of Figure 14;
Figure 16 is a perspective view of the condenser mounting bracket of Figure 14;
Figure 17 is a perspective view from the cavity open face of a fourth embodiment of condenser mounting bracket;
Figure 18 is a perspective view of a shaped end cap for use with the condenser mounting bracket illustrated in Figure 17; and,
Figure 19 is a perspective view of the condenser mounting bracket of Figure 17 illustrating the position of the condenser end cap.

### Description of the Preferred Embodiments

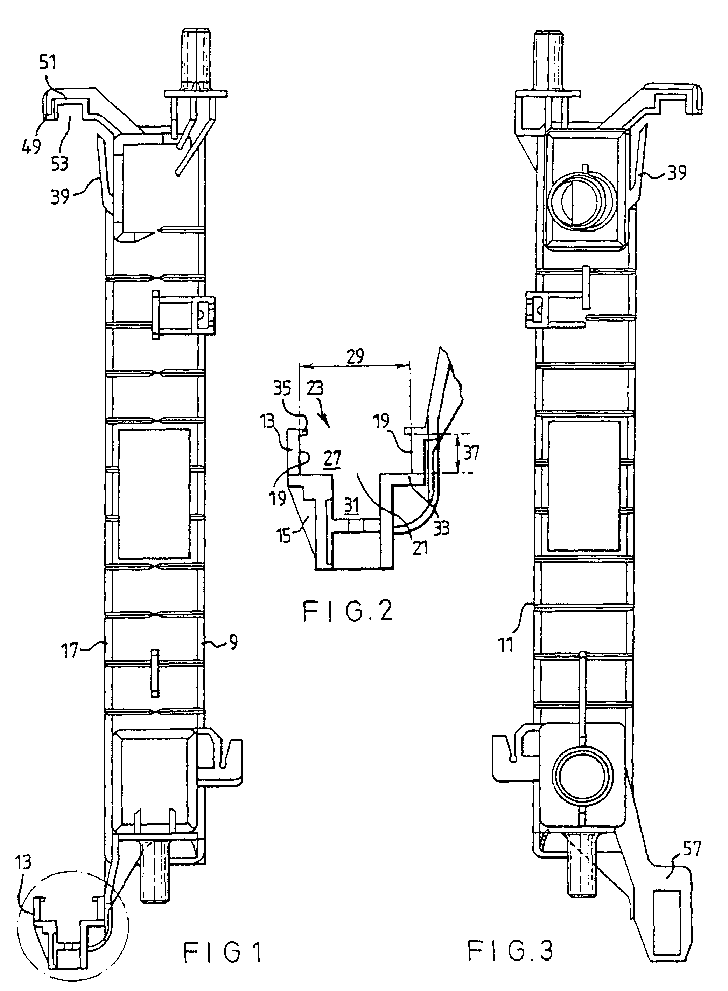

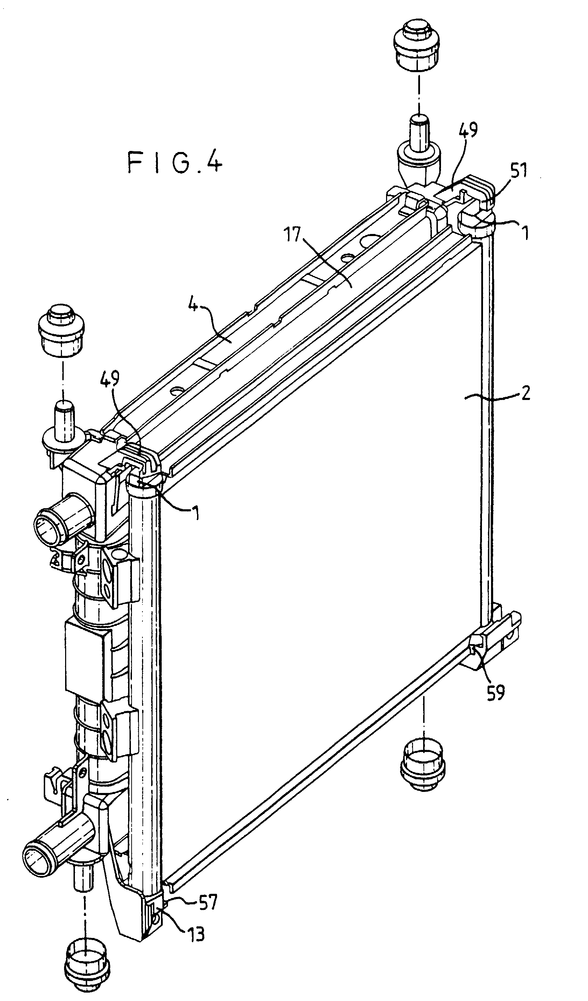

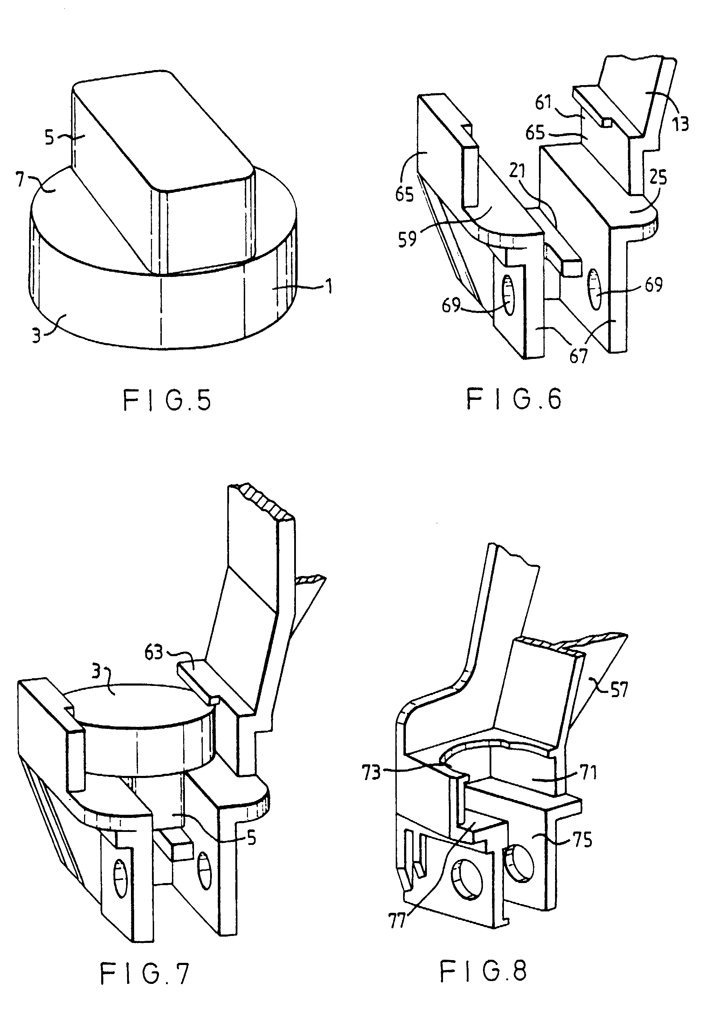

A first embodiment of a radiator and condenser assembly is shown in Figures 1 to 11. Detail of the radiator end tanks are shown Figures 1 and 3 but the rest of the radiator is not illustrated. Similarly although the condenser is illustrated in Figure 4 no further details of the condenser will be described other than the end cap. The rest of the radiator and the condenser are conventional and their structure would be apparent to the skilled addressee of the specification. In use the condenser 2 and radiator 4 lie parallel to one another. The condenser includes two tranverse edges each of which has two end caps facing longitudinally outwards of the edge of the condenser. In Figures 1, 3 and 4 the longitudinal direction is vertical and transverse is the axis extending perpendicular to the page. Thus the condenser 2 includes four end caps 1, facing longitudinally outwards of the edge of the condenser for closing an aperture (not shown) into the condenser, each of the end caps 1 being shaped end caps as shown in Figure 5 with an inner body portion 3 which in use lies closest to the condenser having a cross section shaped and sized to cover the condenser aperture (not shown) and an outer head portion 5 of smaller cross section than the body portion 3 such that a shoulder 7 is formed between the head portion 5 and body portion 3 of the end cap 1 facing longitudinally outwards of the condenser. The radiator includes two radiator end tanks 9 and 11 each comprising a condenser mounting bracket 13 including an end cap receiving housing 15 spaced from the surface 17 of the radiator with walls 19 defining an open faced cavity 21 for receiving the shaped end cap 1. A first open face 23 of the cavity 21 faces longitudinally inwards of the radiator and a second open face 25 faces transversely inwards of the radiator. The cavity 21 defines a body cavity 27 whose cross sectional dimension 29 in the direction perpendicular to the face of the radiator 17 (ie in the plane of the paper) is just greater than the cross section of the body portion 3 of the shaped end cap 1. The cavity 21 also defines a head cavity 31 of smaller cross section than the body cavity 27 such that a shoulder 33 is defined between the head and body cavity facing towards the first open face 23 of the cavity. The housing walls 13 defines a flange 35 facing inwards of the periphery of the first open face 23 of the cavity, the distance 37 between the cavity shoulder 33 and the flange 35 being slightly greater than the depth of the body portion 3 of the shaped end cap.

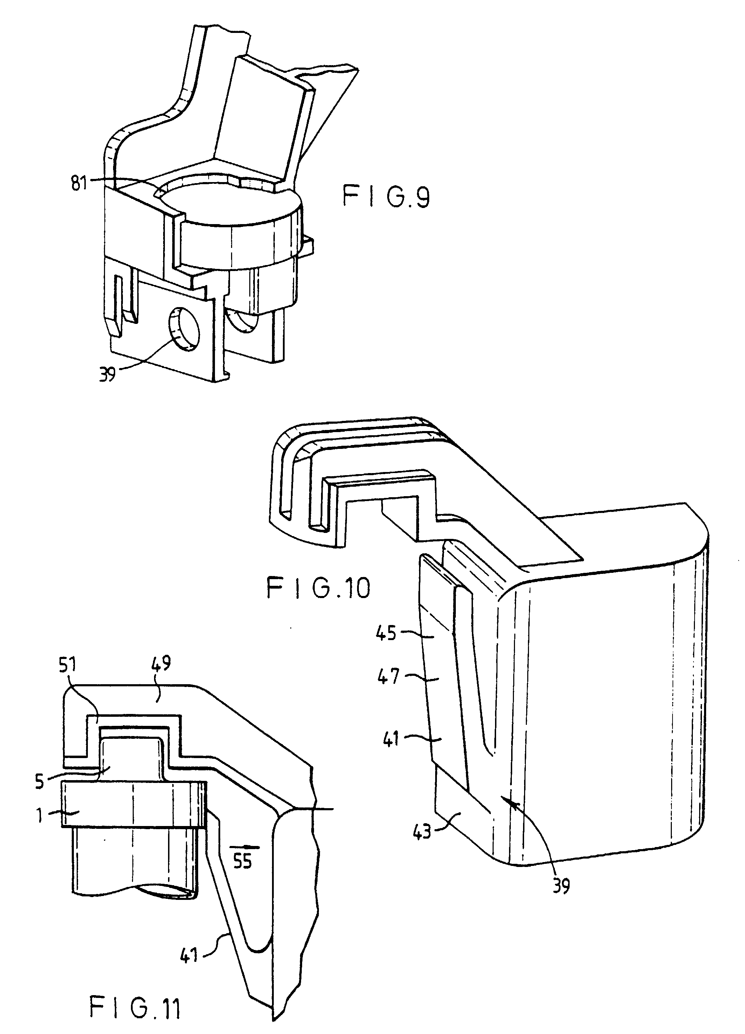

The assembly also comprises a vibration damping device 39 to damp vibration between the radiator and the condenser lying adjacent the radiator. The damping device 39 is illustrated in more detail in Figure 10 and comprises a resilient tongue 41 extending outwards of the surface 43 of the radiator (here the radiator end tank) and having a free end 45 forming a biasing member 47 spaced from the surface 43 of the radiator and whose outer surface when unloaded lies at an acute angle 43 from the radiator (best seen in Figure 1) the size and position of the tongue 41 being arranged such that when the further component (in this case the condenser) is mounted adjacent the radiator the component contacts and pushes the biasing member 47 towards the surface 43 to spring load the tongue 41. In this example the thickness of the biasing member 47 is 3mm and the distance of the free end 45 from the surface 43 of the radiator is 4.8mm.

The radiator includes two radiator end tanks 9 and 11, a return tank 9 and an inlet tank 11. The two tanks are not identical but both are moulded from a coolant resistant 30% glass reinforced heat stabilised type nylon.

Although the condenser includes four shaped end caps of the form shown in Figure 5 each radiator tank includes one only condenser mounting bracket 13 at one end of the tank, in this case the lower end of the tank. It should be noted that it is possible to mount the radiator in a number of different positions within a car and the end tanks may not always be mounted vertically but typically they will be mounted vertically. Each tank 9 includes an upper locating bracket 49 including a slot 51 for receiving the head portion 5 of the end cap. Conveniently the slot 51 has a cross section similarly shaped to the cross section of the head cavity but it will be appreciated by the skilled addressee of the specification that since the end cap to be located in slot 51 does not have to have the same shape as that which is to be mounted in the condenser mounting bracket the slot 51 could be of different dimensions.

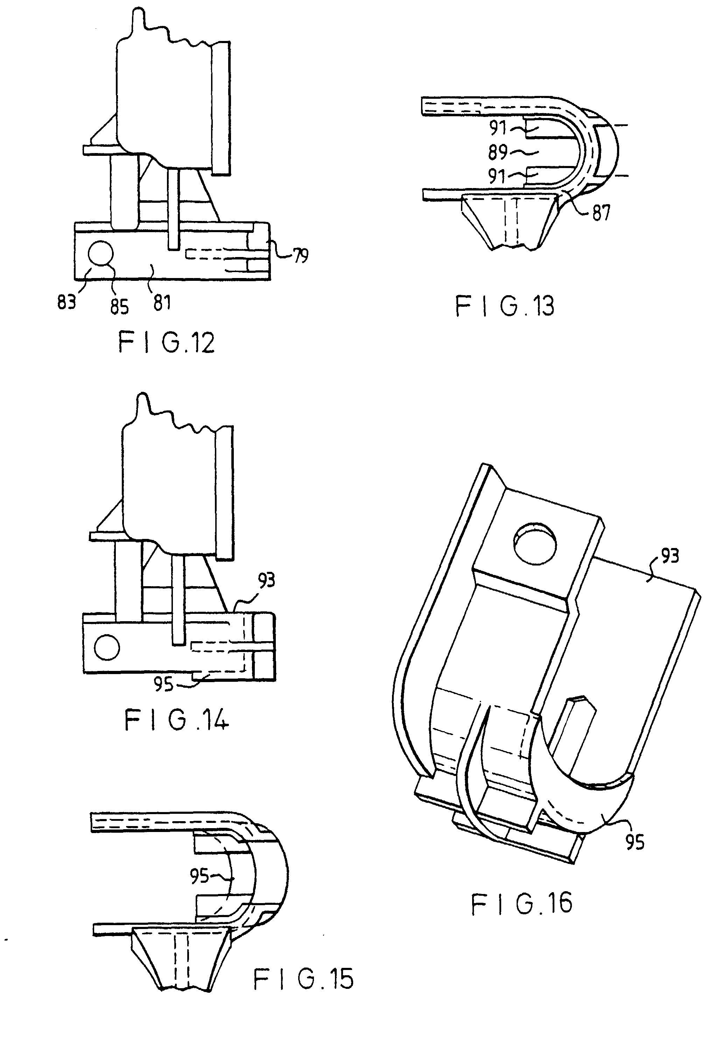

The slot 51 is arranged so that its open mouth 53 is aligned and facing the first open face 23 of the cavity such that when both end caps of the condenser at one end of the condenser are in place within the condenser mounting bracket and the locating bracket the condenser lies in a position parallel and spaced from the radiator. When in this position as shown in Figure 11 the end cap 1 bears against the outer surface of the tongue 41 and urges it in a direction 55 towards the surface of the radiator. This thus provides an integral (since it is moulded with the rest of the radiator end tank) vibration damping device which damps any vibration between the condenser and radiator without any further components needing to be added.

It can be seen by reference to Figures 6 to 9 that the condenser mounting bracket 13 for return radiator tank 9 is slightly different to the condenser mounting bracket 57 forming part of inlet tank 11. Condenser mounting bracket 13 is shown in more detail in Figures 6 and 7. Here the cavity 21 is in the form of an open ended slot of constant T shaped cross section. The slot 59 has a body cavity 61 of cross section slightly greater than the diameter of the body portion 3 of the end cap. Since the slot 59 is open ended the condenser end cap could slide into the cavity transversely in two directions. When in position as shown in Figure 7 the end cap is restrained from moving in a longitudinal direction by the flange 63 and shoulder 25 and restrained from movement towards and away from the radiator by the side walls 65. The cap is restrained in a transverse direction is by tightening the walls 65 to the end cap by use of extension jaws 67 which extend from the walls below the cavity and include aligned cylindrical bores 69 through which a bolt or screw threaded member (not shown) can be passed. Tightening of nuts on the screw threaded member or bolt tightens the jaws 67 together to pull in the walls 65 to grip against the edge of the end cap and thus hold it in position.

The alternative form of condenser mounting bracket 57 is illustrated in Figures 8 and 9. This is arranged to accommodate the same shaped end cap 1 and includes a cavity 71 which comprises a semi-cylindrical body cavity 73 of a diameter just greater than the diameter of the body portion of the end cap and a cuboid body cavity 75 for receiving the head portion of the end cap of smaller cross section than the diameter of the body cavity 73 so that a shoulder 77 is formed. When the end cap is in position as shown in Figure 9 it is retained by passing a screw through aligned bores 79. The limit of transverse movement is defined by the rear face 81 of the body cavity 73.

The reason that the two different body condenser mounting brackets are used together is to allow for the introduction of the condenser into position. The condenser is slid transversely from the return end 9 of the radiator tank through the open ended slots 59 and 51 until two of the end caps locate in condenser mounting bracket 57 and the locating bracket 49 of inlet tank 11. This retains the condenser in position.

Figures 12 and 13 illustrate a second embodiment of condenser mounting brackets suitable for use in a radiator and condenser assembly in accordance with the invention. The bracket 79 has walls 81 which extend transversely to form jaws 83 having aligned cylindrical bores 85 for gripping an end cap when in position. The condenser mounting bracket 79 defines a semi-cylindrical body cavity 87 and slot 89 accommodates the head portion that defines shoulders 91.

A third embodiment of condenser mounting bracket is illustrated in Figures 14 to 16. The condenser mounting bracket 93 is similar to that of the second embodiment but which further includes lower arcuate support web 95 which supports the outer face of the head portion of the end cap and provides a strengthening web for the bracket 93.

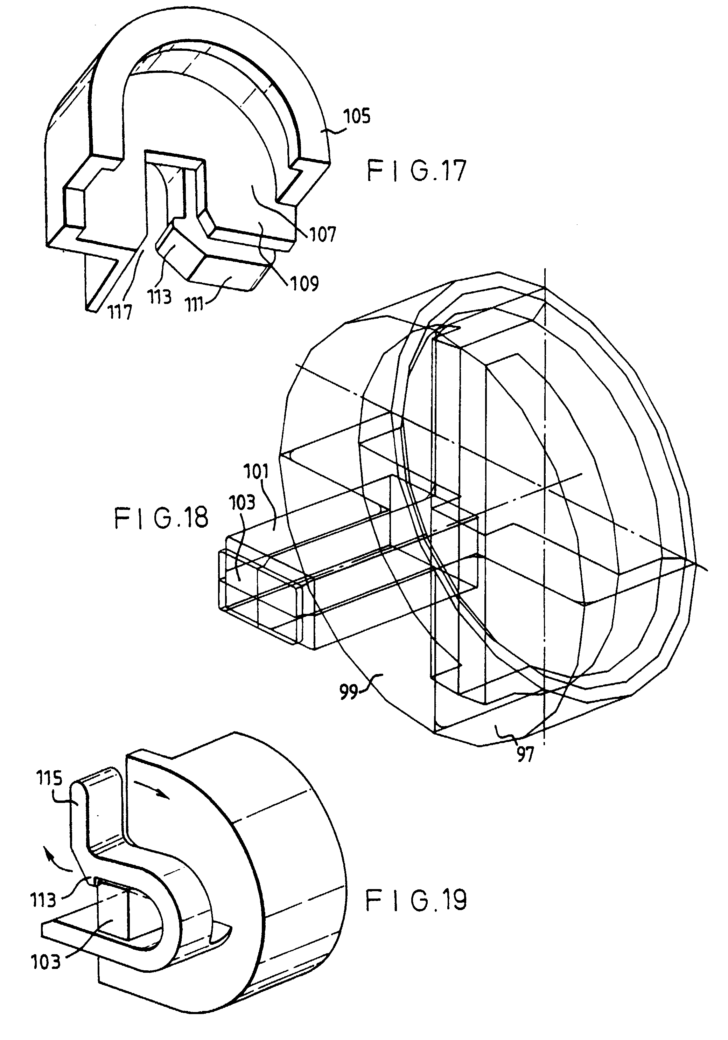

A fourth embodiment is illustrated in Figure 17 to 19. In this embodiment the end cap 97 is different from that used in the previous three embodiments. The end cap 97 has a cylindrical body portion 99 and a cuboid head portion 101 of smaller cross section than body portion 99. The head portion 101 includes at its outer end projection 103 to form a locking pin. The condenser mounting bracket 105 has a cavity comprising a body cavity 107 which is semi-cylindrical with a large shoulder 109 which extends to the edge of head portion 101 of the end cap. A third web 111 forms a clip. This is in the form of a projecting nose 113 and extending from the nose 113 a finger 115. The web 111 is narrow and the material of the nylon is resilient but deformable. The nose 113 projects across the opening 117 into the head cavity and together the pin 103 and nose 113 form a snap fit catch. To release the end cap from the mounting bracket 105 the finger 115 is pushed in a direction clockwise as seen in Figure 19 thus rotating nose 113 in a clockwise direction out of engagement with pin 103 thus allowing the pin to be removed.

It will be appreciated that other forms of snap fit can be utilised to lock the condenser end cap into the condenser mounting bracket.

## Claims

1. A radiator and condenser assembly, in which the condenser (2) includes at least one end cap (1) facing longitudinally outwards of the edge of the condenser for closing an aperture into the condenser, the end cap (1) being a shaped end cap with an inner body portion (3) of a cross section shaped and sized to cover the condenser aperture and which in use lies closest to the condenser, and an outer head portion (5) of smaller cross section than the body portion (3) such that a shoulder (7) is formed between the head (5) and body (3) portion of the end cap (1) facing longitudinally outwards of the condenser, and the radiator includes at least one radiator end tank (9,11) which comprises a condenser mounting bracket (13), the mounting bracket (13) including an end cap receiving housing (15) spaced from the surface (17) of the radiator with walls (19) defining an open faced cavity (21) for receiving the shaped end cap (1), a first open face (23) of the cavity facing longitudinally inwards of the radiator and a second open face (25) of the cavity facing transversely inwards of the radiator, the cavity (21) defining a body cavity (27) whose cross sectional dimension (29) at least in a direction perpendicular to the face of the radiator is slightly greater than the cross section of the body portion (5) of the shaped end cap (1), and a head cavity (31) of smaller cross section than the body cavity (27) such that a shoulder (33) is defined between the head and body cavity facing towards the first open face (23) of the cavity, the housing walls defining a flange (35) facing inwards of the periphery of the first open face of the cavity, the distance between the cavity shoulder (33) and the flange (35) being slightly greater than the depth of the body portion of the shaped end cap.

2. A radiator and condenser assembly according to claim 1, in which the condenser (2) includes two shaped end caps (1) and both the radiator end tanks (9,11) include a condenser mounting bracket.

3. An assembly according to claim 1 or 2, in which the radiator includes releasable locking means (69) for locking the end cap into position within the bracket.

4. An assembly according to claim 3, in which the releasable locking means comprises a screw threaded means co-operating with jaws (67) forming part of the housing such that tightening of the screw tightens the walls of the cavity about the shaped end cap.

5. An assembly according to claim 3, in which the releasable locking means comprises a resilient detent extending into the cavity and engaged by the end cap when inserted into the cavity to give a snap fit.

6. An assembly according to any one of the preceding claims, in which the body (3) of the or each shaped end cap (1) is cylindrical and the head (5) of the or each shaped end cap is of substantially constant cross section.

7. An assembly according to any one of the preceding claims, in which the shoulder (7) of the end cap (1) is planar.

8. An assembly according to any one of the preceding claims, in which the end cap (1) is essentially T-shaped in cross section.

9. An assembly according to any one of the preceding claims, in which the radiator end tank (9,11) is moulded from glass filled nylon.

10. An assembly according to any one of the preceding claims, in which the end cap (1) is metallic.

11. An assembly according to any one of the preceding claims, in which the radiator includes a vibration damping device (39) comprising a resilient tongue (41) extending outwards from the surface of the radiator and having a free end forming a biasing member spaced from the surface of the radiator and whose outer surface when unloaded lies at an acute angle to the surface of the radiator, the size and position of the tongue being arranged such that when a further component is mounted adjacent the radiator, the component contacts and urges the biasing member towards the surface of the radiator to spring load the tongue.

12. An assembly according to Claim 11, in which the vibration damping device (39) is integrally moulded with the radiator end tank (9,11).

13. An assembly according to Claim 11 or 12, in which the condenser end cap (1) bears against the outer surface of the biasing member.

## Patentansprüche

1. Eine Heizkörper- und Kondensator-Vorrichtung, in der der Kondensator (2) mindestens eine Endkappe (1) enthält, die längs ausserhalb der Kante des Kondensators liegt, um eine Öffnung im Kondensator zu schliessen, wobei die Endkappe (1) eine profilierte Endkappe ist, mit einem inneren Körperabschnitt (3) mit einem Querschnitt, der profiliert und dimensioniert ist, um die Öffnung des Kondensators zu bedecken und die im Betrieb in unmittelbarer Nähe zum Kondensator liegt und einem äusseren Kopfabschnitt (5) mit kleinerem Querschnitt als der des Körperabschnitts (3), so dass ein Vorsprung (7) zwischen dem Kopf- (5) und Körperabschnitt (3) der Endkappe (1) gebildet wird, die längs ausserhalb des Kondensators liegt und der Heizkörper enthält mindestens einen Heizkörper-Endtank (9, 11), der eine Kondensator-Montagestütze (13) enthält, wobei die Montagestütze (13) eine Endkappe enthält, die das Gehäuse (15) aufnimmt, das sich im Abstand von der Oberfläche (17) des Heizkörpers befindet, mit Wänden (19), die einen Hohlraum (21) mit offener Fläche bilden, um die profilierte Endkappe (1) aufzunehmen, wobei eine erste offene Fläche (23) des Hohlraums längs innerhalb des Heizkörpers liegt und eine zweite offene Fläche (25) des Hohlraums quer innerhalb des Heizkörpers liegt, wobei der Hohlraum (21) einen Körperhohlraum (27) bildet, dessen Querschnittsdimension (29) in mindestens einer Richtung senkrecht zur Fläche des Heizkörpers etwas grösser als der Querschnitt des Körperabschnitts (5) der profilierten Endkappe (1) ist und ein Kopfhohlraum (31) mit kleinerem Querschnitt als der des Körperhohlraums (27), so dass ein Absatz (33) zwischen dem Kopfund dem Körperhohlraum gebildet wird, der der ersten offenen Fläche (23) des Hohlraums gegenüberliegt, wobei die Gehäusewände einen Flansch (35) bilden, der nach innen gegenüber von der Peripherie der ersten offenen Fläche des Hohlraums liegt, wobei die Entfernung zwischen dem Absatz (33) des Hohlraums und des Flanschs (35) etwas grösser als die Tiefe des Körperabschnitts der profiliterten Endkappe ist.

2. Eine Heizkörper- und Kondensator-Vorrichtung nach Anspruch 1, in der der Kondensator (2) zwei profilierte Endkappen (1) enthält und beide Heizkörper-Endtanks (9, 11) eine Kondensator-Montagestütze enthalten.

3. Eine Vorrichtung nach Anspruch 1 oder 2, in der der Heizkörper eine freisetzbare Blockiervorrichtung (69) enthält, um die Endkappe in ihrer Stellung in der Stütze zu blockieren.

4. Eine Vorrichtung nach Anspruch 3, in der die freisetzbare Blockiervorrichtung eine Schraubenvorrichtung mit Gewindebohrung enthält, die zusammen mit den Backen (67) fungiert, die einen Teil des Gehäuses bilden, so dass ein Festziehen der Schraube die Wände des Hohlraums um die profilierte Endkappe spannt.

5. Eine Vorrichtung nach Anspruch 3, in der die freisetzbare Blockiervorrichtung einen elastischen Feststeller hat, der sich in den Hohlraum erstreckt und in den die Endkappe eingreift, wenn sie in den Hohlraum eingeführt wird, um eine Schnappeinpassung zu liefern.

6. Eine Vorrichtung nach irgendeinem der vorhergehenden Ansprüche, in der der Körper (3) der oder jeder profilierten Endkappe (1) zylinderförmig ist und der Kopf (5) der oder jeder profilierten Endkappe im wesentlichen einen ständigen Querschnitt hat.

7. Eine Vorrichtung nach irgendeinem der vorhergehenden Ansprüche, in der der Vorsprung (7) der Endkappe (1) eben ist.

8. Eine Vorrichtung nach irgendeinem der vorhergehenden Ansprüche, in der die Endkappe (1) im wesentlichen T-förmig im Querschnitt ist.

9. Eine Vorrichtung nach irgendeinem der vorhergehenden Ansprüche, in der der Heizkörper-Endtank (9, 11) aus mit Glas verstärktem Nylon ist.

10. Eine Vorrichtung nach irgendeinem der vorhergehenden Ansprüche, in der die Endkappe (1) aus Metall ist.

11. Eine Vorrichtung nach irgendeinem der vorhergehenden Ansprüche, in der der Heizkörper eine Vibrationsdämpf-Vorrichtung (39) enthält, die eine elastische Zunge (41) hat, die sich ausserhalb der Oberfläche des Heizkörpers erstreckt und ein freies Ende hat, das ein dezentrierendes Glied bildet, das sich im Abstand von der Oberfläche des Heizkörpers befindet und dessen äussere Fläche, wenn sie unbelastet ist, in einem spitzen Winkel zur Oberfläche des Heizkörpers liegt, wobei die Dimension und die Stellung der Zunge derartig ausgelegt sind, dass wenn ein anderer Bestandteil nahe des Heizkörpers montiert wird, der Bestandteil das dezentrierende Glied kontaktiert und gegen die Oberfläche des Heizkörpers zwingt, um die Zunge mit einer Federbelastung zu versehen.

12. Eine Vorrichtung nach Anspruch 11, in der die Vibrationsdämpf-Vorrichtung (39) als ein Teil mit dem Heizkörper-Endtank (9, 11) gegossen ist.

13. Eine Vorrichtung nach Anspruch 11 oder 12, in der die Kondensator-Endkappe (1) sich gegen die äussere Oberfläche des dezentrierenden Glieds lagert.

## Revendications

1. Ensemble de radiateur et de condenseur, dans lequel le condenseur (2) comprend au moins un bouchon d'extrémité (1) orienté longitudinalement vers l'extérieur du bord du condenseur destiné à obturer une ouverture menant dans le condenseur, le bouchon d'extrémité (1) étant un bouchon d'extrémité profilé comportant une partie interne de corps (3) d'une section transversale profilée et dimensionnée de façon à recouvrir l'ouverture du condenseur et qui, en utilisation, se trouve la plus proche du condenseur, et une partie externe de tête (5) de section transversale plus petite que la partie de corps (3) de sorte qu'un épaulement (7) est formé entre la partie de tête (5) et la partie de corps (3) du bouchon d'extrémité (1) orienté longitudinalement vers l'extérieur du condenseur, et le radiateur comprend au moins une boîte à eau d'extrémité de radiateur (9, 11) laquelle comprend une patte de montage de condenseur (13), la patte de montage (13) comprenant un logement de réception de bouchon d'extrémité (15) espacé de la surface (17) du radiateur présentant des parois (19) définissant une cavité à faces ouvertes (21) destinée à recevoir le bouchon d'extrémité profilé (1), une première face ouverte (23) de la cavité étant orientée longitudinalement vers l'intérieur du radiateur et une seconde face ouverte (25) de la cavité étant orientée transversalement vers l'intérieur du radiateur, la cavité (21) définissant une cavité de corps (27) dont la dimension en section transversale (29) au moins suivant une direction perpendiculaire à la face du radiateur, est légèrement supérieure à la section transversale de la partie de corps (5) du bouchon d'extrémité profilé (1), et une cavité de tête (31) de plus petite section transversale que la cavité de corps (27) de sorte qu'un épaulement (33) est défini entre la cavité de tête et la cavité de corps, orienté en direction de la première face ouverte (23) de la cavité, les parois du logement définissant une bride (35) orientée vers l'intérieur de la périphérie de la première face ouverte de la cavité, la distance entre l'épaulement (33) et la bride (35) de la cavité étant légèrement supérieure à la profondeur de la partie de corps du bouchon d'extrémité profilé.

2. Ensemble de radiateur et de condenseur selon la revendication 1, dans lequel le condenseur (2) comprend deux bouchons d'extrémité profilés (1), et les deux boîtes à eau d'extrémité du radiateur (9, 11) comprennent une patte de montage de condenseur.

3. Ensemble selon la revendication 1 ou 2, dans lequel le radiateur comprend un moyen de verrouillage libérable (69) destiné à verrouiller le bouchon d'extrémité en position à l'intérieur de la patte.

4. Ensemble selon la revendication 3, dans lequel le moyen de verrouillage libérable comprend un moyen fileté coopérant avec des mâchoires (67) faisant partie du logement de sorte qu'un serrage de la vis resserre les parois de la cavité autour du bouchon d'extrémité profilé.

5. Ensemble selon la revendication 3, dans lequel le moyen de verrouillage libérable comprend un élément de maintien élastique s'étendant jusque dans la cavité et venant en prise avec le bouchon d'extrémité lorsqu'il est inséré dans la cavité pour obtenir un ajustement par emboîtement.

6. Ensemble selon l'une quelconque des revendications précédentes, dans lequel le corps (3) du ou de chaque bouchon d'extrémité profilé (1) est cylindrique, et la tête (5) du ou de chaque bouchon d'extrémité profilé est de section transversale pratiquement constante.

7. Ensemble selon l'une quelconque des revendications précédentes, dans lequel l'épaulement (7) du bouchon d'extrémité (1) est plan.

8. Ensemble selon l'une quelconque des revendications précédentes, dans lequel le bouchon d'extrémité (1) est pratiquement en forme de T en section transversale.

9. Ensemble selon l'une quelconque des revendications précédentes, dans lequel la boîte à eau d'extrémité de radiateur (9, 11) est moulée à partir d'un nylon chargé de verre.

10. Ensemble selon l'une quelconque des revendications précédentes, dans lequel le bouchon d'extrémité (1) est métallique.

11. Ensemble selon l'une quelconque des revendications précédentes, dans lequel le radiateur comprend un dispositif d'amortissement des vibrations (39) comprenant une languette élastique (41) s'étendant vers l'extérieur depuis la surface du radiateur et comportant une extrémité libre formant un élément de sollicitation espacé de la surface du radiateur et dont la surface externe, en l'absence de contrainte, s'étend suivant un angle aigu par rapport à la surface du radiateur, la dimension et la position de la languette étant conçues de façon que, lorsqu'un composant supplémentaire est monté à proximité du radiateur, le composant vient en contact avec l'élément de sollicitation et le pousse en direction de la surface du radiateur afin de charger élastiquement la languette.

12. Ensemble selon la revendication 11, dans lequel le dispositif d'amortissement des vibrations (39) est moulé en une pièce avec la boîte à eau d'extrémité de radiateur (9, 11).

13. Ensemble selon la revendication 11 ou 12, dans lequel le bouchon d'extrémité de condenseur (1) porte sur la surface externe de l'élément de sollicitation.
